# EUROPEAN PATENT APPLICATION

(11) **EP 2 579 201 A1**
(43) Date of publication of application: **10.04.2013**
(21) Application number: 11183731.6
(22) Date of filing: 03.10.2011
(51) Int. Cl.: G06Q 30/02

(54) **Method for managing a user profile within a social network**

(71) Applicant: Alcatel Lucent, 75007 Paris (FR)
(72) Inventor: Beauvais, Mathieu, 91620 Nozay (FR); Stan, Johann, 91620 Nozay (FR)
(74) Representative: Camus, Olivier Jean-Claude

(57) **Abstract**

The present invention relates to a method for managing a user profile within a social network, said user profile being used in one subset of said social network wherein interactions about a specific topic take place and comprising a plurality of user profile attributes. Said method comprises:
- extracting a specific topic from interactions inside said subset of said social network ;
- for said specific topic, finding the most relevant matching semantic entity in a linked data graph ;
- building a first directed graph of semantic entities for said most relevant matching semantic entity ;
- building a second directed graph of semantic entities for each said user profile attribute ;
- finding a first semantic entity inside said second directed graph of entity matching a semantic entity of the first directed graph of semantic entities ;
- for each user profile attribute, displaying a second semantic entity from said second directed graph of entities) according to said first semantic entity and at least one blurring criterion.

## Description

### TECHNICAL FIELD

The present invention relates to a method for managing a user profile within a social network.

It also related to a corresponding profile management system for carrying out said method.

Such a method may be used in any social network sites, applications or services using social networks.

### BACKGROUND OF THE INVENTION

Nowadays, users being part of a social network are managing their user profile comprising attributes by declaring their attributes user profile as private or public.

More and more customer relationship manager called CRM services are based on internet crawlers gathering all the data available on internet about their customers in order to provide personalized services to their customers. These CRM often use the user profile, and more particularly the public attributes, of their customers without their permission.

Therefore, on one hand, on the customer side, the customers may not give their authorization to any unpermitted use of gathered information by the CRM or may declare all their attributes as private without declaring the CRM as "a friend" with the risk of losing the opportunity to access to personalized interesting services.

This user profile management is based on a mechanism for all or nothing. On the other hand, on the CRM side, these CRM have to deal with a lot of information to identify what could be pertinent information on customers.

### SUMMARY OF THE INVENTION

It is an object of the invention to provide a method for managing a user profile within a social network that permit to manage more accurately the privacy of the user profile.

To this end, there is provided a method for managing a user profile within a social network, said user profile being used in one subset of said social network wherein interactions about a specific topic take place and comprising a plurality of user profile attributes, said method comprising:
- extracting a specific topic from interactions inside said subset of said social network;
- for said specific topic, finding the most relevant matching semantic entity in a linked data graph;
- building a first directed graph of semantic entities for said most relevant matching semantic entity ;
- building a second directed graph of semantic entities for each said user profile attribute ;
- finding a first semantic entity inside said second directed graph of entity matching a semantic entity of the first directed graph of semantic entities ;
- for each user profile attribute, displaying a second semantic entity from said second directed graph of entities according to said first semantic entity and at least one blurring criterion.

As we will see in further details, the method provides blurred user profile attributes according to in particular a specific topic of a social network subset via database widely spread though the Web.

In a first non-limitative embodiment, said building of said first directed graph comprises:
- creating a starting node, said starting node being a semantic entity from the linked data graph and corresponding to said most relevant semantic entity ; and
- creating other nodes representing semantic entities from said linked data graph, each pointed node being a semantic generalization entity of a source node, a pointed node and a source node being linked by an edge, each edge being directed and being of a unique type.

In a second non-limitative embodiment, said building of said second directed graph comprises:
- creating a starting node, said starting node being a semantic entity from the linked data graph and corresponding to said user profile attribute ; and
- creating other nodes representing semantic entities from said linked data graph, each pointed node being a semantic generalization entity of a source node, a pointed node and a source node being linked by an edge, each edge being directed and being of a unique type.

In a third non-limitative embodiment, said linked data graph is based on DBpedia™. This is the biggest online available ontology today.

In a fourth non-limitative embodiment, a blurring criterion is computed according to:
- a subject of the subset of the social network ; and/or
- a social proximity between the user of said user profile and the other participants of said subset of the social network ; and/or
- a contribution of a participant to said subset of the social network;
   and/or
- a predetermined blurring level ; and/or
- a blurring strategy.

In a fifth non-limitative embodiment, the building of the directed graph of semantic entities is performed according to at least one propriety, a semantic entity pointed by said propriety being more general or equal to said starting node. It permits to construct different branches for the directed graph of semantic entities.

In a sixth non-limitative embodiment, the building of the directed graph of semantic entities comprises a sub-step of calculating semantic distances between the starting node and the other nodes. It permits to apply a blurring level on the user profile attributes.

In a seventh non-limitative embodiment, the display of said second semantic entity is performed by means of a human interface and the method further comprises modifying at least one blurring criterion computed for said subset of said social network by means of first components of said human interface.

In a eight non-limitative embodiment, the method further comprises manually modifying said second semantic entity by means of second components of said human interface by navigating in said second directed graph of entities.

In a ninth non-limitative embodiment, the social network is a network of customers and/or suppliers managed by a customer relationship management system.

In addition, there is provided a profile management system for managing a user profile within a social network, said user profile being used in one subset of said social network wherein interactions about a specific topic take place and comprising a plurality of user profile attributes, said profile management system comprising a processor unit adapted to:
- extract a specific topic from interactions inside said subset of said social network ;
- for said specific topic, find the most relevant matching semantic entity in a linked data graph ;
- build a first directed graph of semantic entities for said most relevant matching semantic entity ;
- build a second directed graph of semantic entities for each said user profile attribute ;
- find a first semantic entity inside said second directed graph of entity matching a semantic entity of said first directed graph of semantic entities ;
- for each user profile attribute), display a second semantic entity from said second directed graph of entities according to said first semantic entity and at least one blurring criterion.

In a first non-limitative embodiment, the processor unit is further adapted to:
- create a starting node, said starting node being a semantic entity from the linked data graph and corresponding to said most relevant semantic entity ; and
- create other nodes representing semantic entities from said linked data graph, each pointed node being a semantic generalization entity of a source node, a pointed node and a source node being linked by an edge, each edge being directed and being of a unique type, for building said first directed graph.

In a second non-limitative embodiment, the processor unit is further adapted to:
- create a starting node, said starting node being a semantic entity from the linked data graph and corresponding to said user profile attribute ; and
- create other nodes representing semantic entities from said linked data graph, each pointed node being a semantic generalization entity of a source node, a pointed node and a source node being linked by an edge, each edge being directed and being of a unique type, for building said second directed graph.

In a third non-limitative embodiment, said profile management system further comprises a human interface comprising first components corresponding to the at least one blurring criterion enabling a user of said user profile to modify said blurring criterion computed for said subset of said social network.

In a fourth non-limitative embodiment, said human interface further comprises second components to modify manually said second semantic entity to be displayed by navigating in said second directed graph of entities.

In addition, there is provided a computer program product, comprising a set of instructions, which when loaded into said computer, causes the computer to carry out the method for managing a user profile, according to any one of the previous characteristic.

### BRIEF DESCRIPTION OF THE FIGURES

Some embodiments of methods and/or apparatus in accordance with embodiments of the present invention are now described, by way of example only, and with reference to the accompanying drawings, in which:
- Fig. 1 illustrates a profile management system overview which carries out the method for managing a user profile according to a non-limitative embodiment of the invention;
- Fig. 2 illustrates a schematic organization chart of the method for managing a user profile according to a non-limitative embodiment of the invention;
- Fig. 3a illustrates a first directed graph created by the managing method of Fig. 2;
- Fig. 3b illustrates a second directed graph created by the managing method of Fig. 2; and
- Fig. 4 illustrates some user profile information comprising attributes values resulting from the managing method of Fig. 2.

### DESCRIPTION OF EMBODIMENTS OF THE INVENTION

In the following description, well-known functions or constructions by the man skilled in the art are not described in detail since they would obscure the invention in unnecessary detail.

As will be described hereinafter, the method for managing a user profile Upf within a social network SNTW will help a user to blur attributes of his user profile Upf depending on several parameters such as the purpose or the subject of a subset SUSNTW of said social network SNTW he wants to be connected to, his activity in the subset, his relationship with other people in the subset etc. Blurred profile attributes will therefore be provided to the members of said subset SUSNTW who have access to the public attributes or to any other third party having access to the public attributes, a third party being a physical person such as a member of the forum, an application, a service etc.

In a non-limitative embodiment, said social network is a network of customers and/or suppliers managed by a customer relationship management system called CRM, such as the management of clients of a bank or an internet service provider (non-limitative embodiments)

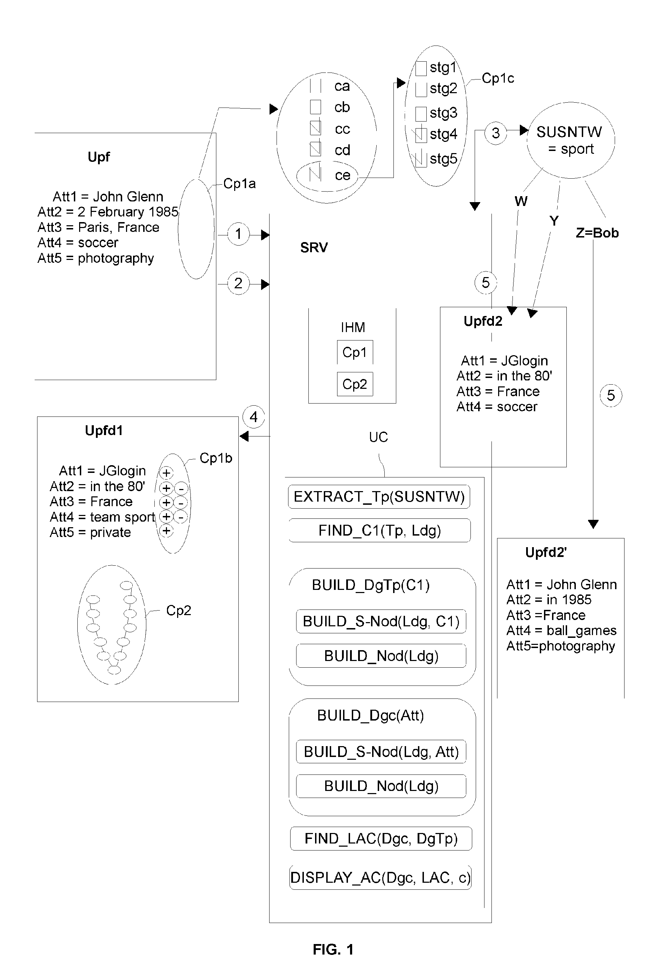

The method MTH is carried out by a profile management system SRV, said profile management system SRV being illustrated in Fig. 1. In a non-limitative embodiment, said profile management system is a server.

Said profile manager system SRV comprises a human interface IHM which permits:
- a user to select a blurring strategy (step 1 illustrated) ;
- a user to connect/subscribe to a subset SUSNTW (step 2 illustrated) ;
- to display for each user profile attribute Att, a second semantic entity AC and hence to provide user profile information Upfd1 or eventually a plurality of user profile information Upfd1 (for different members of the subset) with blurred or not blurred attribute values. Said display is either shown to the owner of the user profile (step 3 illustrated) so that he may modify the blurred attributes, then step 4 hereinafter is performed, or either shown directly to the members of the subset SUSNTW. Said second semantic entity AC is calculated according to the blurring method MTH ;
- a user to modify the accuracy of the value of his profile attributes (by modifying the respective second semantic entities), and eventually to chose a profile for a specific member(s) of the subset (step 4 illustrated);
- to display to the members of the subset SUSNTW the user profile displayed Upfd2 to the owner and eventually modified by the owner (step 5 illustrated) and eventually to display to a specific member another user profile Upfd2'.

The method for managing a user profile Upf is carried out in step 3 and is triggered by step 2.

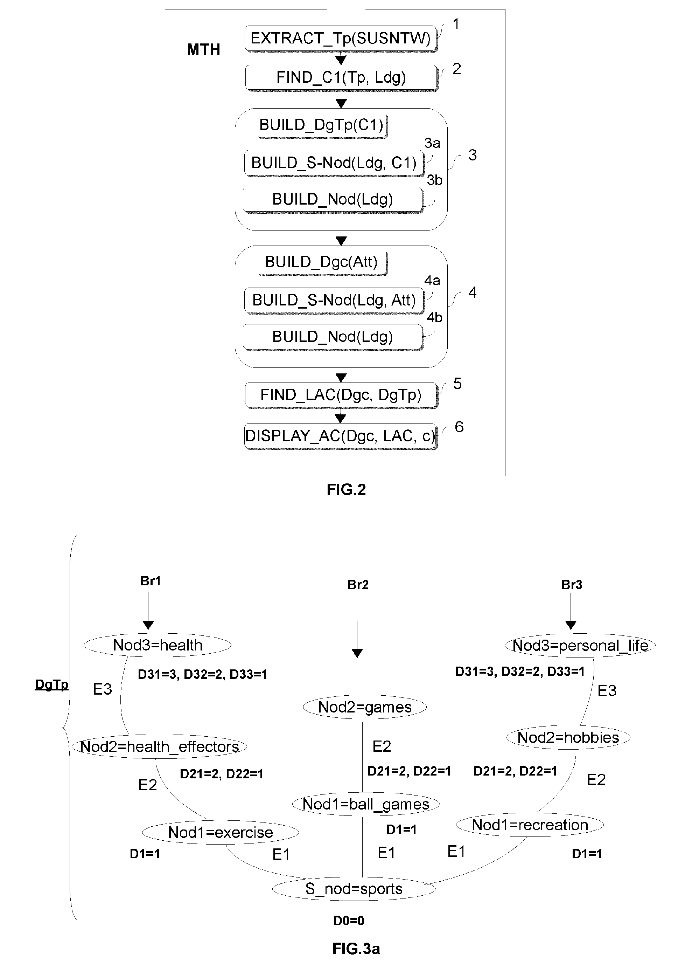

The method for managing a user profile Upf within a social network SNTW, said user profile Upf being used in one subset SUSNTW of said social network SNTW wherein interactions about a specific topic Tp take place and comprising a plurality of user profile attributes Att, is described in detail in a non-limitative embodiment as illustrated in Fig. 2.

By interactions, one means any sort of activity conveying meaningful information between two or more people, such as an answer to a question in a forum.

Said method comprises:
- extracting a specific topic Tp from interactions inside said subset SUSNTW of said social network SNTW (step EXTRACT_Tp(SUSNTW) illustrated) ;
- for said specific topic Tp, finding the most relevant matching semantic entity C1 in a linked data graph Ldg (FIND_C1 (Tp, Ldg) illustrated) ;
- building a first directed graph of semantic entities DgTp for said most relevant matching semantic entity C1 (step BUILD_DgTp(C1) ;
- building a second directed graph of semantic entities Dgc for each said user profile attribute Att ;
- finding a first semantic entity LAC inside said second directed graph of entity Dgc matching a semantic entity inside said first directed graph of semantic entities DgTp (step FIND_LAC(Dgc, DgTp) illustrated) ;
- for each user profile attribute Att, displaying a second semantic entity AC from said second directed graph of entities Dgc according to said first semantic entity LAC and at least one blurring criterion c (step DISPLAY_AC(Dgc, LAC, c) illustrated).

In a non-limitative embodiment, said building of the first direct graph DgTp comprises:
- creating a starting node S-Nod, said starting node S-Nod being a semantic entity from the linked data graph Ldg and corresponding to said most relevant semantic entity C1 (sub-step BUILD_S-Nod(Ldg, C1) illustrated) ; and
- creating other nodes Nod representing semantic entities from said linked data graph Ldg, each pointed node being a semantic generalization entity of a source node, a pointed node and a source node being linked by an edge E, each edge E being directed and being of a unique type (sub-step BUILD_Nod(Ldg) illustrated).

In a non-limitative embodiment, said building of the second direct graph Dgc comprises:
- creating a starting node S-Nod, said starting node S-Nod being a semantic entity from the linked data graph Ldg and corresponding to said user profile attribute Att (sub-step BUILD_S-Nod(Ldg, Att) illustrated) ;
- creating other nodes Nod representing semantic entities from said linked data graph Ldg, each pointed node being a semantic generalization entity of a source node, a pointed node and a source node being linked by an edge E, each edge E being directed and being of a unique type (sub-step BUILD_Nod(Ldg) illustrated).

It is to be noted that a subset SUSNTW of social network is a medium which allows people to engage in interactions and exchange information on a specific topic, centered around a well-defined physical or multimedia object (e.g. a forum about soccer (virtual world) or a discussion in a train station about the delay of the TGV (physical world) ) etc. Such a subset is composed generally from people from different social spheres (friends, family, coworkers and strangers) and therefore it is important to consider the question of what information to show to a third party (given person, application etc.) at a given time (and in a given conversation for example). In the following, each member of a subset will be represented in virtual worlds by their user profile, i.e. a set of items that represent their identity and interests or a business card or a badge etc. in the physical world.

It is to be noted that user profile attributes comprise in non-limitative examples declared civil status, centers of interest, photography, audio, video or any other multimedia content attached to the user full profile information. Therefore, the blurring method MTH is able to blur textual or media (image, video etc.) attributes.

For example, a user of a social network comprises the user profile with the following self-defined full profile information (attributes Att):
- Name(Att1) = John Glenn
- Birthdate(Att2) = 2, February 1985
- Birthplace(Att3) = Paris, France
- Interest1 (Att4) = soccer
- Interest2(Att5) = photography

Consider user is a member of a forum about "Sport".

The managing method MTH is described in details below with the non-limitative embodiments above-mentioned.

**In a first step 1**), a specific topic Tp is extracted from interactions inside said subset SUSNTW of said social network SNTW.

A subset SUSNTW is composed of interactions between users. An interaction is generally composed of entities (which are the proper nouns) and keywords (which represent the context of said entities) or other linguistic articulations, such as smileys.

Extraction of entities and keywords of an interaction are well-known by the man skilled in the art and won't be described here. To do so, the grammatical category of each term in an interaction is identified using part-of-speech tagging (e.g. noun, verb) and stop words removed. Named entities are identified as terms starting with an upper-case letter or combinations of said terms. Most frequent terms that occur in the said subset SUSNTW of the said social network are considered the specific topics.

In a non-limitative example, the subset SUSNTW is the forum about soccer. Specific topics can be extracted from the subjects on said forum. For example, if an interaction comprises the sentence: "I love to watch live sport every Sunday night", a named entity will be "sports" and the associated keywords will be "love, watch".

Therefore, a first specific topic Tp1 will be for example: "sports".

In a non-limitative embodiment, a specific topic Tp is set up in the form of an URI "Uniform Resource Identifier". Said URI will be used to perform a query in a linked data graph. It is to be noted that there will be as many queries as named entities found.

**In a second step 2**), for said specific topic Tp, the most relevant matching semantic entity C1 is found in a linked data graph Ldg.

It is to be noted that for each specific topic Tp found in the previous step, this matching step is performed.

It is to be noted that a linked data graph comprises links between different concepts (semantic entities), a semantic entity linked with another being more general than the other semantic entity. Therefore, a linked data graph Ldg comprises different concepts from the specialized concepts to generalized concepts.

Linked Data appeared as a need to have a structured dataset representing concepts and connections between said concepts from the world and different domains. Nowadays, more and more data is available on the Web. Such data can include information about organizations, governments, public people and from many other fields. More and more individuals and public/private organizations contribute to this deluge by choosing to share their data with others. On the other hand, third parties consume this data to build new business opportunities and enhance recommendation strategies, such as online marketing and user re-targeting. Clearly, the presence of structured data is required so that they can be most easily reused. The structured published data are called linked data or web semantic.

The following principles govern linked data:
- the use of URIs as names for things ;
- the use of HTTP URIs so that these names can be accessible for people ;
- the use of standardized access and data representations (RDF "resource description framework", SPARQL protocol "Protocol and RDF Query Language). The RDF language able to storage data. It is to be noted that SPARQL is an RDF query language for request data on a database of the RDF type. It is adapted to the specific RDF graphs.
   SPARQL can express interrogative or constructive queries:
- an interrogative query type SELECT, can extract from the RDF graph, a sub-graph representing a set of resources verifying conditions defined in a clause WHERE. For example, a SELECT query for finding the mother and father or the grand-parents of a person can be applied on a RDF graph comprising genealogy information ;
- a constructive query type CONSTRUCT provides a new graph which completes the questioned graph.
   CONSTRUCT queries can be applied on said RDF graph to add the relation brother-sister, cousin-cousin, uncle-nephew etc. which are not explicitly declared in the original graph. and finally ;
- the inclusion of links to other URIs for efficient data discovery. Such RDF links pointing to external data sources allows the linked data graph to be interconnected.

In a non-limitative embodiment, said linked data graph Ldg is based on DBPedia™ which is the most complete dataset in the frame of linked data with more than 4 million concepts (semantic entities) and relations between them. Therefore it has a very large topic-coverage and serves as a hub in linked data, as almost every item in other datasets are assigned an external link to DBPedia™. It is the biggest ontology today. Further datasets include that of Freebase™, Umber™, YagoTMand OpenCyc™. Almost each of them is linked to DBPedia™. Other datasets target a specific domain to publish data. This includes geographic data (information about places, countries and locations) with GeoNames™. Almost each location item in Geoname™ is linked to the corresponding concept in DBPedia™, which allows retrieving additional information about the place (such as nearby locations or people related to the place or its category). Fields that are also well covered by such datasets include government data (e.g. data.gov.uk, data.gov), libraries and more generally, education (e.g. OpenLibrary™, Semantic Web Dogfood Server™). Less significant datasets are also available for life sciences, such as biology (e.g.Bio2RDF™) and commerce (e.g. RDF Book Mashup™).

In a non-limitative example, the linked data graph Ldg may contain the semantic entities "soccer, outdoor_activity, team_sport, collaboration, human_behaviour ball_games, games, hobbies, personal_life, self, humans, sports, exercise, health_effectors, health, recreation, hobbies"

Therefore the first topic Tp1 mentioned before will be associated to "sport", the semantic entity C1 equal to "sports" which is the most relevant matching semantic entity.

**In a third step 3**), for most relevant matching semantic entity C1, a first directed graph of semantic entities DgTp is built.

Said step comprises the sub-steps of:
- **3a**) creating a starting node S-Nod, said starting node S-Nod being a semantic entity from the linked data graph Ldg and corresponding to said most relevant matching semantic entity C1 ;
- **3b**) creating other nodes Nod representing semantic entities from said linked data graph Ldg, each pointed node being a semantic generalization entity of a source node, a pointed node and a source node being linked by an edge E, each edge E being directed and being of a unique type.

The sub-steps are described below.

**In a first sub-step 3a**), a starting node S-Nod is created, said starting node S-Nod being a semantic entity from the linked data graph Ldg and corresponding to said most relevant semantic entity C1.

Hence, in the non-limitative example given above, for the entity C1 (sports), the starting node S-Nod, as illustrated in Fig. 3a, will be "sports" which is a semantic entity of the linked data graph Ldg used.

**In a second sub-step 3b**), other nodes Nod representing semantic entities from said linked data graph Ldg are created, each pointed node being a semantic generalization entity of a source node, a pointed node and a source node being linked by an edge E, each edge E being directed and being of a unique type.

It is to be noted that an edge of unique type means that only a unique edge linked two nodes together.

This step permits to associate different semantic entities to the most relevant semantic entity, said entities being more or less specific or general. In other words, the semantic neighborhood of the starting semantic entity S-Nod is collected.

In a non-limitative embodiment, the building of the first directed graph of semantic entities DgTp is performed according to at least one propriety Pr, a semantic entity pointed by said propriety Pr being more general or equal to a source semantic entity, here the starting node S_Nod. This permits to obtain a directed graph DgTp comprising a plurality of branches Br.

The propriety permits to consider the links that connect a semantic entity (here the starting node S_Nod) to a semantic entity that expresses a more general information or the same information. A propriety Pr is associated to each semantic entity.

In a non-limitative embodiment, in DBPedia™, the propriety Pr called skos:category is used.

Hence, to perform those sub-steps, in a non-limitative example, the following SPARQL queries are used. It allows retrieving all semantic entities connected to a given semantic entity C, say C1 "Sports" via the starting node S_Nod.

```
 SELECT ?hasValue
 WHERE
 { <http://dbpedia.org/resource/Sports> <http://purl.org/dc/terms/subject>
 ?hasValue })
```

This first query permits to find the corresponding categories for the entity sports.

```
 SELECT ?prop ?value
 WHERE {
 <http://dbpedia.org/resource/Category:Sports> skos:broader
 ?value}
```

This second query permits to find the upper categories (the more general categories, which are therefore more abstract) for the entity sports.

From these queries, one retrieves the semantic entities that have the starting node S_Nod, here "sports" as a source, and one retrieves the semantic entities that arrive to the starting node S_Nod.

From the set of retrieved semantic entities (which are the neighbored semantic entities to the starting node S-Nod), those that are connected with the following propriety Pr which is a skos/category link in the example given are considered:
- <http://purl/org/dc/terms/subject> : Category: Ball games
- <http://purl/org/dc/terms/subject> : Category: Recreation
- <http://purl/org/dc/terms/subject> : Category: Exercice

Therefore a filter is performed on the neighbored semantic entities found according to the propriety Pr. It is to be noted that in the example of DBpedia™, a propriety skos:category is associated to each semantic entity.

Thus, as illustrated in Fig. 3a, the first directed graph DgTp comprises the three following branches which represent the possible granular blurring schema for the most relevant semantic entity C1:
Br1 :sports<<Exercise<<Health_effectors<< Health
Br2:sports<<ball_games <<games
Br3aports<<recreation<<hobbies<<personal_life

Hence, in the non-limitative example given, for the 1st branch, the other nodes Nod will be, as illustrated in Fig. 3a, exercise, health_effectors, health and the edges will be:
E1: sports - exercise (S_Nod-Nod1)
E2: exercise - health_effectors (Nod1-Nod2)
E3: health_effectors - health (Nod2-Nod3)

Hence, in the non-limitative example given, for the 2^{nd} branch, the other nodes Nod will be, as illustrated in Fig. 3a, ball_games and games and the edges will be:
E1: sports - ball_games (S_Nod-Nod1)
E2: ball_games - games (Nod1-Nod2)

Hence, in the non-limitative example given, for the 3rd branch, the other nodes Nod will be, as illustrated in Fig. 3a, recreation, hobbies, and personal_life and the edges will be:
E1: sports - recreation (S_Nod-Nod1)
E2: recreation - hobbies (Nod1-Nod2)
E3: hobbies - personal_life (Nod2-Nod3)

A first directed graph DgTp associated to the most relevant semantic entity C1 is therefore created, said graph comprising three branches in the example illustrated in Fig. 3a.

Hence, these sub-steps permit to retrieve from a knowledge base different levels of granularity of a given concept C1.

In a non-limitative embodiment, the building of the first directed graph of semantic entities DgTp comprises a sub-step of calculating semantic distances D between the starting node S_Nod and the other nodes Nod.

A semantic distance D indicates how far a semantic entity is from another entity (i.e. from how many edges E a semantic entity is separated from another one). In a non-limitative example, a Dijkstra algorithm well-known by the man skilled in the art may be used.

It is to be noted that DBPedia™ already comprises such semantic distances D. Therefore, when the directed graph of entities DgTp is created from this knowledge base, it comprises such semantic distances D, and this sub-step does not need to be executed.

Hence, in the example of the 1 st branch Br1, the nodes N of said directed graph DgTp comprise the following distances D.
- Nod1 : D1 = 1, which means that there is a direct link between Nod1 and S_Nod.
- Nod2:
   o D2₁ = 2, which means that there are two links between Nod2 and S_Nod.
   o D2₂ = 1, which means that there is a direct link between Nod2 and Nod1.
- Nod3 :
   o D3₁ = 3, which means that there are three links between Nod3 and S_Nod.
   o D3₂ = 2, which means that there are two links between Nod3 and Nod1.
   o D3₂ = 3, which means that there is a direct link between Nod3 and Nod2.

The same reasoning applied for the 2nd branch Br2 and the 3^{rd} branch Br3 as illustrated in Fig. 3a.

**In a fourth step 4)**, a second directed graph of semantic entities Dgc is built for each said user profile attributes Att.

It is to be noted that this step applied on the attributes Att from the full profile information.

Said step comprises the sub-steps of:
- **4a)** creating a starting node S-Nod, said starting node S-Nod being a semantic entity from the linked data graph Ldg and corresponding to said user profile attribute Att ;
- **4b)** creating other nodes Nod representing semantic entities from said linked data graph Ldg, each pointed node being a semantic generalization entity of a source node, a pointed node and a source node being linked by an edge E, each edge E being directed and being of a unique type.

The sub-steps are described below.

**In a first sub-step 4a)**, a starting node S-Nod is created, said starting node S-Nod being a semantic entity from the linked data graph Ldg and corresponding to said user profile attribute Att.

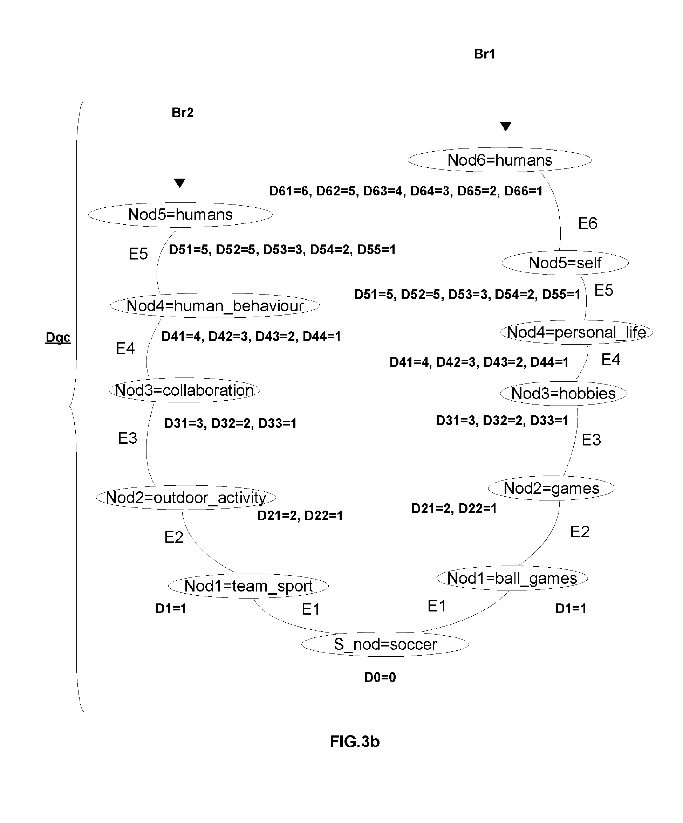

Hence, in the non-limitative example given above, for the attribute Att4 (Soccer) of the user John, the starting node S-Nod, as illustrated in Fig. 3b, will be "Soccer" which is a semantic entity of the linked data graph Ldg used.

**In a second sub-step 4b**), other nodes Nod representing semantic entities from said linked data graph Ldg are created, each pointed node being a semantic generalization entity of a source node, a pointed node and a source node being linked by an edge E, each edge E being directed and being of a unique type.

It is to be noted that an edge of unique type means that only a unique edge linked two nodes together.

This step permits to associate different semantic entities to an attribute Att, said entities being more or less specific or general. In other words, the semantic neighborhood of the starting semantic entity S-Nod is collected.

In a non-limitative embodiment, the building of the directed graph of semantic entities Dgc is performed according to at least one propriety Pr, a semantic entity pointed by said propriety Pr being more general or equal to a source semantic entity, here the starting node S_Nod. This permits to obtain a directed graph Dgc comprising a plurality of branches Br.

Hence, to perform those sub-steps, in a non-limitative example, the following SPARQL queries is used. It allows retrieving all semantic entities connected to a given specific topic, say Tp1 "soccer" via the starting node S_Nod.

```
 SELECT ?hasValue
 WHERE
 { <http://dbpedia.org/resource/Soccer> <http://purl.org/dc/terms/subject>
 ?hasValue }
```

This first query permits to find the corresponding categories for the entity Soccer.

```
 SELECT ?prop ?value
 WHERE {
 <http://dbpedia.org/resource/Category:Soccer> skos:broader
 ?value}
```

This second query permits to find the upper categories (the more general categories, which are therefore more abstract) for the entity Soccer.

From these queries, one retrieves the semantic entities that have the starting node S_Nod, here "soccer" as a source, and one retrieves the semantic entities that arrive to the starting node S_Nod.

From the set of retrieved semantic entities (which are the neighbored semantic entities to the starting node S-Nod), those that are connected with the following propriety Pr which is a skos/category link in the example given are considered:
- <http://purl/org/dc/terms/subject> : Category: Ball games
- <http://purl/org/dc/terms/subject> : Category: Team_sport

Therefore a filter is performed on the neighbored semantic entities found according to the propriety Pr. It is to be noted that in the example of DBpedia™, a propriety skos:catagory is associated to each semantic entity.

Thus, the directed graph Dgc comprises the two following branches which represent the possible granular blurring schema for a specific topic Tp1:
Br1 :soccer<<ball_games<<games<<hobbies<<personal_life<<self<<human s
Br2:soccer<<team_sport<<outdoor-activity<<collaboration<<human-behavi our<<humans

Hence, in the non-limitative example given, for the 1st branch, the other nodes Nod will be, as illustrated in Fig. 3b, ball_games, games, hobbies, personal_life, self, humans and the edges will be:
E1: soccer - ball_games (S_Nod-Nod1)
E2: ball_games - games (Nod1-Nod2)
E3: games - hobbies (Nod2-Nod3)
E4: hobbies - personal_life (Nod3-Nod4)
E5: personal_life - self (Nod4-Nod5)
E6: self- humans (Nod5-Nod6)

Hence, in the non-limitative example given, for the 2^{nd} branch, the other nodes Nod will be, as illustrated in Fig. 3b, team sport, outdoor activity, collaboration, human behavior, human and the edges will be:
E1: soccer - team_sport (S_Nod-Nod1)
E2: team_sport - outdoor activity (Nod1-Nod2)
E3: outdoor activity - collaboration (Nod2-Nod3)
E4: collaboration - human_behaviour (Nod3-Nod4)
E5: human_behaviour - humans (Nod4-Nod5)

A directed graph Dgc associated to each attribute Att is therefore created, said graph comprising two branches in the example illustrated in Fig. 3b. Hence, these sub-steps permit to retrieve from a knowledge base different levels of granularity of a given concept Tp.

In a non-limitative embodiment, the building of the directed graph of semantic entities Dgc comprises a sub-step of calculating semantic distances D between the starting node S_Nod and the other nodes Nod.

Hence, in the example of the 2^{nd} branch Br2, the nodes N of said directed graph Dgc comprise the following distances D.
- Nod1 : D1 = 1, which means that there is a direct link between Nod1 and S_Nod.
- Nod2 :
   o D2₁ = 2, which means that there are two links between Nod2 and S_Nod.
   o D2₂ = 1, which means that there is a direct link between Nod2 and Nod1.
- Nod3 :
   o D3₁ = 3, which means that there are three links between Nod3 and S_Nod.
   o D3₂ = 2, which means that there are two links between Nod3 and Nod1.
   o D3₂ = 3, which means that there is a direct link between Nod3 and Nod2.
- Nod4 :
   o D4₁ = 4, which means that there are four links between Nod4 and S_Nod.
   o D4₂ = 3, which means that there are three links between Nod4 and Nod1.
   o D4₃ = 2, which means that there are two links between Nod4 and Nod2.
   o D4₄ = 1, which means that there is a direct link between Nod4 and Nod3.
- Nod5 :
   o D5₁ = 5, which means that there are five links between Nod4 and S_Nod.
   o D5₂ = 4, which means that there are four links between Nod4 and Nod1.
   o D5₃ = 3, which means that there are three links between Nod4 and Nod2.
   o D5₄ = 2, which means that there is a two link between Nod4 and Nod3.
   o D5₄ = 1, which means that there is a direct link between Nod4 and Nod3.

The same reasoning applied for the 1^{st} branch Br1 as illustrated in Fig. 3b.

**In a fifth step 5**), a first semantic entity LAC is found inside said second directed graph of entity Dgc that matches a semantic entity inside said first directed graph DgTp.

Hence, the first semantic entity LAC is the less abstract concept which distance with the starting node of the second direct graph Dgc is the lowest.

In the non-limitative example given, the first semantic entity LAC "ball_ games" is found matching the most relevant semantic entity of said first directed graph DgTp in said second directed graph Dgc.

Indeed, said entity ball_games is found within both direct graphs DgTp (corresponding to the attribute soccer) and Dgc (corresponding to the concept sports) and which is the nearest from the starting node of the second direct graph Dgc.

It is to be noted that if there are a plurality of choices of LAC, one is chosen among those plurality.

Hence, the first semantic entity LAC is the less abstract concept which distance with the starting node of the second direct graph Dgc is the lowest.

If there is a plurality of choices of LAC, the less abstract concept which distance with the starting node of the first direct graph DgTp is the lowest. If there is still a plurality of choices of LAC, one is chosen among this plurality.

**In a sixth step 6**), for each user profile attribute Att, a second semantic entity AC is displayed from said second directed graph of entities Dgc according to said first semantic entity LAC and at least one blurring criterion c.

According to a blurring criterion, a level of blur LB is defined, said level of blur being equal to the semantic distance D. According to said distance D, the second semantic entity AC is chosen from the first semantic entity LAC and displayed in place of the corresponding user profile attribute Att.

Hence, the blurring of an attribute Att is performed according to the link found between the entity linked data C1 and the entity LAC of the attribute graph Dgc and according to a blurring criterion.

According to the blurring criterion, a level of blur LB for the value of attribute Att will be chosen. The lower said level LB is, the more accurate the value of said attribute Att is, said accurate value which corresponds to the second semantic entity AC is disclosed.

Hence, if the level of blur LB is low, the closest second semantic entity AC from the first semantic entity LAC is disclosed, and if the of blur LB is high, the farthest second semantic entity AC from the first semantic entity LAC is disclosed. It is to be noted that according to the level of blur LB, the semantic distance D previously described is used to disclose the second semantic entity AC.

In non-limitative embodiments, a blurring criterion (ca, cb, cc, cd, ce) is computed according to:
- a) a subject of the subset SUSNTW of the social network SNTW ; and/or
- b) a social proximity between the user of said user profile and the other participants of said subset SUSNTW of the social network SNTW ; and/or
- c) a contribution of a participant to said subset SUSNTW of the social network SNTW ; and/or
- d) a predetermined blurring level ; and/or
- e) a blurring strategy.

Different non-limitative examples are given below for these criteria.
● a) If the subject of the subset SUSNTW is very similar to the object of the attribute Att, the level of blur LB for the value of the attribute Att4 will be set to a low level, which means that a more accurate value of the attribute Att can be displayed than for other attributes Att. Hence, in the example given, as the subject of the subset is "sports" and the attribute Att4 in the full profile information is "soccer", the second semantic entity AC disclosed to the members of said subset will be first semantic entity LAC i.e. "ball_games" with a distance D1=1. In order to check the similarity, one selects the most relevant semantic entity in the second directed graph Dgc of the attribute Att which corresponds to the subject of the subset SUSNTW. The distance D between the most relevant entity selected and the starting node S-Nod is retrieved and the level of blur is set to that distance D.
● b) If the owner X of the user profile and user Y already discussed a lot in the past (they had many interactions), user X will likely want to disclose to user Y more accurate values from his full profile information. A low level will be assigned to the level of blur LB and the second semantic entity AC which has a low semantic distance from the first semantic entity LAC will be disclosed, for example "ball_games (D1)" or "games (D21)". Otherwise, the second semantic entity LAC which has a high semantic distance D from the second semantic entity AC will be disclosed, for example "collaboration (D3₁)".
   In a non-limitative example, proximity exploitation may be performed using predefined thresholds. For example, some predefined thresholds may be defined for the level of blur LB according to the number of discussions engaged between the owner X and a user Y. Hence, for examples, if the discussions are over 100, LB = 0, if the discussions are over 50, LB=1 etc....
● c) If the owner of the user profile is an important contributor to the subset SUSNTW (he has/had many discussions with many people for instance) or has a lot in influence of this community, members of the subset could access more accurate value of the attributes related to the subject of the subset than for other attributes. In a non-limitative example, some predefined thresholds may be defined for the level of blur LB according to the number of contributions (number of messages post for example) of the owner. In a non-limitative example, some predefined thresholds may be defined for the level of blur LB according to the influence of the owner (number of messages originated from the owner which have been broadcasted by the other members, number of messages of the owner scored).
● d) The predetermined level blurring level LB is set by the owner of the user profile when creating his profile for example ;
● e) Blurring strategy may be configured in advance in order to ease the selection by the owner or to automatically choose the level of blur for each attribute in the full profile information. Hence, for example, the system will provide several strategy of privacy management. In non-limitative examples, five strategies are configured:
   - Strategy 1 (stg1) where all the attributes Att declared public to everyone will be disclosed with their accurate values. Therefore, all Att1 to Att4 will be disclosed.
   - Strategy 2 (stg2) where only the attributes Att relevant to the subset are disclosed with the accurate values. Therefore, only Att4 will be disclosed with the value (semantic entity) "Ball_games (D1)".
   - Strategy 3 (stg3) where all the attributes Att declared public to everyone will be disclosed with lightly blurred values.
   - Strategy 4 (stg4) where all the attributes Att declared public to everyone will be disclosed with heavily blurred values.
      As explained before and as illustrated in Fig. 1, this strategy may be chosen by the user at step 1 before the managing method is executed.
   - Strategy 5 (stg5) where all the attributes Att declared public to everyone will be disclosed with heavily blurred values except for the users who had many interactions in the past on this subset SUSNTW with the owner X of the user profile. In the example given in Fig. 1, the user Z (Bob) had many interactions, therefore the attribute Att4 will be disclosed with the value (semantic entity) "Ball_games (D1)" and with the user profile Upfd2' as illustrated in Fig.1. Therefore, if this strategy is chosen (in step 1 illustrated in Fig. 1), there will be two user profile displayed Upfd2 and Upfd2' respectively to all the members of the forum sport except Bob and to Bob.

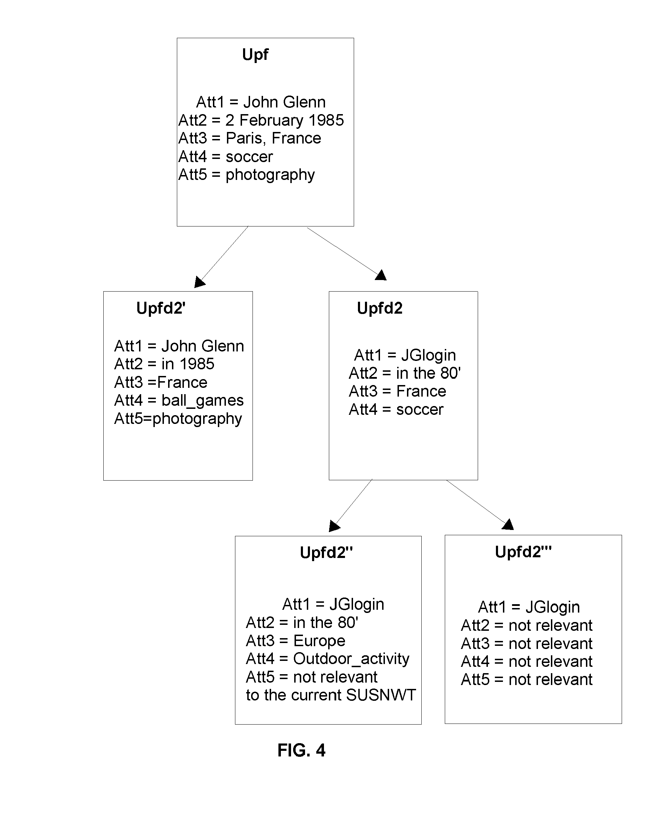

As illustrated in Fig. 4, different public user profiles Upfd2, Upfd2', Upfd2", Upfd2"' may be displayed to the members (or different members) of the subset SUSNTW from the full profile information Upf (a member being a physical person of an application accessing said user profile), said different public user profiles comprising more or less blurred attributes Att. In the example illustrated in Fig. 4, Upfd2' will be displayed to user "Bob" (directly or after being displayed to the owner "John Glenn", whereas Upfd2 will be displayed to the other members of the forum SUSNTW (eventually after being modified by the owner and transformed into user profile Upfd2" or Upfd2''').

It is to be noted that the display of the second semantic entity AC is performed via a human interface IHM (described below) accessible by the owner of the user profile Upf, or directly to the members of the subset (automatic display).

In a non-limitative embodiment, the method further comprises modifying at least one blurring criterion c computed for said subset of said social network SNTW by means of first components Cp1 of said human interface IHM.

In another non-limitative embodiment, the method further comprises manually modifying said second semantic entity AC by means of second components Cp2 of said human interface IHM by navigating in said second directed graph of entities Dgc.

As illustrated in Fig. 1, in a non-limitative embodiment, a profile management server SRV permits to implement said managing method MTH.

In non-limitative embodiments, said server is a social network server which manages also the social network, or is a third party server which is situated in between the social network and the user computer.

Therefore, in a non-limitative embodiment, said profile management system SRV for managing a user profile Upf within a social network SNTW, said user profile Upf being used in one subset SUSNTW of said social network SNTW wherein interactions about a specific topic Tp take place and comprising a plurality of user profile attributes Att, comprises a processor unit UC adapted to:
- extract a specific topic Tp from interactions inside said subset SUSNTW of said social network SNTW ;
- for said specific topic Tp, find the most relevant matching semantic entity C1 in a linked data graph Ldg ;
- build a first directed graph of semantic entities for said most relevant matching semantic entity ;
- build a second directed graph of semantic entities Dgc for each said user profile attribute Att
- find a first semantic entity LAC inside said second directed graph of entity Dgc matching a semantic entity of said first directed graph of semantic entities DgTp;
- for each user profile attribute Att, display a second semantic entity AC from said second directed graph of entities Dgc according to said first semantic entity LAC and at least one blurring criterion c.

In a non-limitative embodiment, the processor unit UC is further adapted to:
- create a starting node S-Nod, said starting node S-Nod being a semantic entity from the linked data graph Ldg and corresponding to said most relevant semantic entity C1 ; and
- create other nodes Nod representing semantic entities from said linked data graph Ldg, each pointed node being a semantic generalization entity of a source node, a pointed node and a source node being linked by an edge E, each edge E being directed and being of a unique type, for building said first direct graph DgTp.

In a non-limitative embodiment, the processor unit UC is further adapted to:
- create a starting node S-Nod, said starting node S-Nod being a semantic entity from the linked data graph Ldg and corresponding to said user profile attribute Att ; and
- create other nodes Nod representing semantic entities from said linked data graph Ldg, each pointed node being a semantic generalization entity of a source node, a pointed node and a source node being linked by an edge E, each edge E being directed and being of a unique type, for building said second direct graph Dgc.

Said profile management system SRV further comprises a human interface IHM comprising:
- first components Cp1 corresponding to the at least one blurring criterion enabling a user of said user profile Upf to modify said blurring criterion computed for said subset SUSNTW of said social network SNTW ; and/or
- second components Cp2 to modify manually said second semantic entity AC to be displayed by navigating in said second directed graph of entities Dgc.

Therefore, the said human interface IHM comprises components Cp1 corresponding to the at least one blurring criterion c enabling a user of said user profile Upf to modify said blurring criterion computed for said subset SUSNTW of said social network SNTW.

With this component Cp1, the owner of the user profile may:
- select the blurring criteria c he wants to use for each attribute Att or for the all set of user profile attributes, i.e. the blurring criterion which will be taken into account the in the managing method MTH (components illustrated Cp1a) ; and
- modify the level of blur LB calculated by the managing method MTH and applied for each attribute Att (components illustrated Cp1b).
- select the desired strategy stg for each or all user profile attributes (Cp1c).

Hence, by means of this IHM, the user of the user profile Upf is able to modify the blurring level value of his user profile attributes, for example by clicking minus or plus button, or even the second semantic entity displayed.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

It is to be understood that the present invention is not limited to the aforementioned embodiments and variations and modifications may be made without departing from the scope of the invention. In the respect, the following remarks are made.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It is to be understood that the present invention is not limited to the aforementioned application network of customers or suppliers management in a CRM.

Hence, the invention may be applied in any social network sites, applications or services using social networks, such as call centers using CRM or for electronic card exchange information in non-limitative examples.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described method.

There are numerous ways of implementing functions of the method MTH by means of items of hardware or software, or both, provided that a single item of hardware or software can carry out several functions. It does not exclude that an assembly of items of hardware or software or both carry out a function. Said hardware or software items can be implemented in several manners, such as by means of wired electronic circuits or by means of a computer program product that is suitable programmed respectively. One or a plurality of computer program products can be contained in a computer or in the profile management system SRV, said SRV comprising a unit control UC, said unit control being hardware or software items as above stated.

The computer program products comprise a set of instructions.

Thus, said set of instructions contained, for example, in a computer programming memory or in a server memory, may cause the computer or the server SV to carry out the different steps of the method MTH.

The set of instructions may be loaded into the programming memory by reading a data carrier such as, for example, a disk. A service provider can also make the set of instructions available via a communication network such as, for example, the Internet.

Hence, some embodiments of the invention may comprise one or a plurality of the following advantages:
- it permits to preserve privacy and allow third party application (such as CRM) to provide a service based on user information without needing to crawl or gather all the possible data on all users ;
- it provides the possibility to disclose acceptable information to third party application for them to provide a better service or experience ;
- it provides the user a way to modify quickly the values of the attributes which will be disclosed to the other third parties ;
- said method described may be used for any type of network (physical, virtual which user profile management is centralized or decentralized.

Any reference sign in the following claims should not be construed as limiting the claim. It will be obvious that the verb "to comprise" and its conjugations do not exclude the presence of any other steps or elements beside those defined in any claim. The word "a" or "an" preceding an element or step does not exclude the presence of a plurality of such elements or steps.

## Claims

1. Method (MTH) for managing a user profile (UPF) within a social network (SNTW), said user profile (Upf) being used in one subset (SUSNTW) of said social network (SNTW) wherein interactions about a specific topic (Tp) take place and comprising a plurality of user profile attributes (Att), said method comprising :
- extracting a specific topic (Tp) from interactions inside said subset (SUSNTW) of said social network (SNTW) ;
- for said specific topic (Tp), finding the most relevant matching semantic entity (C1) in a linked data graph (Ldg) ;
- building a first directed graph of semantic entities (DgTp) for said most relevant matching semantic entity (C1) ;
- building a second directed graph of semantic entities (Dgc) for each said user profile attribute (Att) ;
- finding a first semantic entity (LAC) inside said second directed graph of entity (Dgc) matching a semantic entity of the first directed graph of semantic entities (DgTp) ;
- for each user profile attribute (Att), displaying a second semantic entity (AC) from said second directed graph of entities (Dgc) according to said first semantic entity (LAC) and at least one blurring criterion (c).

2. A method (MTH) as claimed in claim 1, wherein said building of said first direct graph (DgTp) comprises:
- creating a starting node (S-Nod), said starting node (S-Nod) being a semantic entity from the linked data graph (Ldg) and corresponding to said most relevant semantic entity (C1) ; and
- creating other nodes (Nod) representing semantic entities from said linked data graph (Ldg), each pointed node being a semantic generalization entity of a source node, a pointed node and a source node being linked by an edge (E), each edge (E) being directed and being of a unique type.

3. A method (MTH) as claimed in claim 1 or in claim 2, wherein said building of said second direct graph (Dgc) comprises:
- creating a starting node (S-Nod), said starting node (S-Nod) being a semantic entity from the linked data graph (Ldg) and corresponding to said user profile attribute (Att) ; and
- creating other nodes (Nod) representing semantic entities from said linked data graph (Ldg), each pointed node being a semantic generalization entity of a source node, a pointed node and a source node being linked by an edge (E), each edge (E) being directed and being of a unique type.

4. A method (MTH) as claimed in any one of the previous claims, wherein said linked data graph is based on DBpedia™.

5. A method (MTH) as claimed in any one of the previous claims, wherein a blurring criterion (c) is computed according to :
- a subject of the subset (SUSNTW) of the social network (SNTW) ; and/or
- a social proximity between the user of said user profile and the other participants of said subset (SUSNTW) of the social network (SNTW) ; and/or
- a contribution of a participant to said subset (SUSNTW) of the social network (SNTW) ; and/or
- a predetermined blurring level ; and/or
- a blurring strategy (stg).

6. A method (MTH) as claimed in any one of the previous claims 2 to 5, wherein the building of the directed graph of semantic entities (DgTp, Dgc) is performed according to at least one propriety (Pr), a semantic entity pointed by said propriety (Pr) being more general or equal to said starting node (S_Nod).

7. A method (MTH) as claimed in any one of the previous claims 2 to 6, wherein the building of the directed graph of semantic entities (DgTp, Dgc) comprises a sub-step of calculating semantic distances (D) between the starting node (S_Nod) and the other nodes (Nod).

8. A method (MTH) as claimed in any one of the previous claims, wherein the display of said second semantic entity (AC) is performed by means of a human interface (IHM) and the method further comprises modifying at least one blurring criterion (c) computed for said subset of said social network (SNTW) by means of first components (Cp1) of said human interface (IHM).

9. A method (MTH) as claimed in claim 8, wherein the method further comprises manually modifying said second semantic entity (AC) by means of second components (Cp2) of said human interface (IHM) by navigating in said second directed graph of entities (Dgc).

10. A method (MTH) as claimed in any one of the previous claims, wherein the social network is a network of customers and/or suppliers managed by a customer relationship management system (CRM).

11. A profile management system (SRV) for managing a user profile (UPF) within a social network (SNTW), said user profile (Upf) being used in one subset (SUSNTW) of said social network (SNTW) wherein interactions about a specific topic (Tp) take place and comprising a plurality of user profile attributes (Att), said profile management system comprising a processor unit (UC) adapted to:
- extract a specific topic (Tp) from interactions inside said subset (SUSNTW) of said social network (SNTW) ;
- for said specific topic (Tp), find the most relevant matching semantic entity (C1) in a linked data graph (Ldg) ;
- build a first directed graph of semantic entities (DgTp) for said most relevant matching semantic entity (C1) ;
- build a second directed graph of semantic entities (Dgc) for each said user profile attribute (Att) ;
- find a first semantic entity (LAC) inside said second directed graph of entity (Dgc) matching a semantic entity of said first directed graph of semantic entities (DgTp) ;
- for each user profile attribute (Att), display a second semantic entity (AC) from said second directed graph of entities (Dgc) according to said first semantic entity (LAC) and at least one blurring criterion (c).

12. A profile management system (SRV) as claimed in claim 11, wherein the processor unit (UC) is further adapted to :
- create a starting node (S-Nod), said starting node (S-Nod) being a semantic entity from the linked data graph (Ldg) and corresponding to said most relevant semantic entity (C1) ; and
- create other nodes (Nod) representing semantic entities from said linked data graph (Ldg), each pointed node being a semantic generalization entity of a source node, a pointed node and a source node being linked by an edge (E), each edge (E) being directed and being of a unique type, for building said first direct graph (DgTp).

13. A profile management system (SRV) as claimed in claim 11 or in claim 12, wherein the processor unit (UC) is further adapted to :
- create a starting node (S-Nod), said starting node (S-Nod) being a semantic entity from the linked data graph (Ldg) and corresponding to said user profile attribute (Att) ; and
- create other nodes (Nod) representing semantic entities from said linked data graph (Ldg), each pointed node being a semantic generalization entity of a source node, a pointed node and a source node being linked by an edge (E), each edge (E) being directed and being of a unique type, for building said second direct graph (Dgc).

14. A profile management system (SRV) as claimed in any one of the previous claims 11 to 13, wherein it further comprises a human interface (IHM) comprising first components (Cp1) corresponding to the at least one blurring criterion enabling a user of said user profile (Upf) to modify said blurring criterion computed for said subset (SUSNTW) of said social network (SNTW).

15. A profile management system (SRV) as claimed in any one of the previous claims 11 to 15, wherein said human interface (IHM) further comprises second components (Cp2) to modify manually said second semantic entity (AC) to be displayed by navigating in said second directed graph of entities (Dgc).

16. A computer program product, comprising a set of instructions, which when loaded into said computer, causes the computer to carry out the method for managing a user profile, as claimed in any one of the previous claims 1 to 10.
